# EUROPÄISCHE PATENTSCHRIFT

(11) **EP 2 312 713 B1**
(45) Veröffentlichungstag und Bekanntmachung des Hinweises auf die Patenterteilung: **10.09.2014**
(21) Anmeldenummer: 10179905.4
(22) Anmeldetag: 27.09.2010
(51) Int. Cl.: H02G 3/12, H02G 3/14

(54) **Elektro-Installationsgerät mit Trägerrahmen und Bedien- oder Funktionselement**
Electric installation device with structure frame and operating or function element
Appareil d'installation électrique doté d'un cadre de support et d'un élément de commande ou de fonctionnement

(30) Priorität: 17.10.2009 DE 102009049710
(43) Veröffentlichungstag der Anmeldung: 20.04.2011
(73) Patentinhaber: ABB AG, 68309 Mannheim (DE)
(72) Erfinder: Schrage, Ortwin, 47906, Kempen (DE); Lisson, Werner, 58093, Hagen (DE); Schulte-Lippern, Günter, 58513, Lüdenscheid (DE); Schneider, Martin, 42499, Hückeswagen (DE); Wiese, Michael, 42897, Remscheid (DE)

(56) Entgegenhaltungen:
- EP-A2- 0 878 941
- EP-A2- 1 993 180

## Beschreibung

Die Erfindung betrüft ein Elektro-Installationsgerät mit mindestens einem in einer handelsüblichen UP-Gerätedose montierbaren Basisgerät, welches über einen Trägerrahmen mit mindestens einem Bedien- oder Funktionselement verbindbar ist, wozu das mindestens eine Bedien- oder Funktionselement mittels eines Rasthakens in Eingriff mit einem Verriegelungselement des Trägerrahmens steht.

Aus der EP 1 993 180 A2 ist eine Sensoreinheit mit einem in einer handelsüblichen Standard-Unterputzdose montierbaren Basisgerät bekannt, welches mit mindestens einem Bedien- oder Funktionselement verbindbar ist, wobei ein Grundträger vorgesehen ist, der mindestens ein Feld inklusive eines eingebrachten Tragrahmens zur Aufnahme eines Bedien- oder Funktionselementes aufweist, wobei im Grundträger mehrere elektrisch leitende Schienen integriert sind, welche teilweise für die elektrische Energieversorgung und teilweise für die Kommunikation dienen.

Die Montage eines Bedien- oder Funktionselementes auf einem Trägerrahmen eines Elektro-Installationsgerätes erfolgt beispielsweise über eine Verrastung. Dabei soll einerseits nach erfolgter erstmaliger Montage eines Bedien- oder Funktionselementes auf dem Trägerrahmen eine spätere Demontage des Bedien- oder Funktionselementes vom Trägerrahmen möglich sein, um derart Einstellungen vornehmen bzw. korrigieren zu können, andererseits soll jedoch ein unbefugtes Mitnehmen eines Bedienelementes "im Vorbeigehen" während des späteren Normalbetriebes verhindert werden.

Aus der EP 878 941 A2, die den Oberbegriff des Anspruchs 1 bildet, sind Funktionsmodule einer Türanlage bekannt, welche von einem Rahmen aufgenommen sind. Die Funktionsmodule weisen Rasten auf und werden mit den Rasten in feststehenden Nasen des jeweiligen Rahmens in Eingriff gebracht.

Der Erfindung liegt die Aufgabe zugrunde, ein Elektro-Installationsgerät mit optimierter Befestigung zwischen einem Bedien- oder Funktionselement und dem Trägerrahmen anzugeben.

Diese Aufgabe wird in Verbindung mit den Merkmalen des Oberbegriffes des Anspruchs 1 erfindungsgemäß dadurch gelöst dass der Rasthaken des Bedien- oder Funktionselements starr ausgebildet ist, während das Verrieglungselement federbeaufschlagt und parallel zur Frontfläche / Rückfläche des Trägerrahmens transversal beweglich ist und eine Feder zwischen einer Feder-Aufnahme des Verriegelungselementes und einer Feder-Arretierung des Trägerrahmens eingespannt ist, wodurch das Verriegelungselement in Richtung einer den Trägerrahmen umgebenden Stirnwand gedrückt wird.

Die mit der Erfindung erzielbaren Vorteile liegen insbesondere darin, dass ein "Abziehen" des Bedien- oder Funktionselementes vom Trägerrahmen per Hand nicht möglich ist und damit ein Mitnehmen des Bedien- oder Funktionselementes "im Vorbeigehen" durch unbefugte Personen verhindert wird. Dabei wirkt die Montagekraft / Klemmkraft rechtwinklig zur Abzieh-Richtung. Die Montage des Bedien- oder Funktionselements am Trägerrahmen erfolgt ohne Werkzeug. Die Demontage des Bedien- oder Funktionselementes vom Trägerrahmen erfolgt unter Verwendung eines Hilfswerkzeuges. Nach erfolgter Demontage kann ein Installateur beispielsweise Einstellungen am Basisgerät vornehmen.

Vorteilhafte Ausgestaltungen der Erfindung sind in den Unteransprüchen gekennzeichnet.

Die Erfindung wird nachstehend an Hand der in der Zeichnung dargestellten Ausführungsbeispiele näher erläutert. Es zeigen:
- Fig. 1: einen seitlichen Schnitt durch ein aus einem Trägerrahmen und mindestens einem Bedien- oder Funktionselement gebildetes Elektro-Installationsgerät,
- Fig. 2: eine perspektivische Sicht auf die Frontfläche eines Trägerrahmens,
- Fig. 3: eine perspektivische Sicht auf die Rückfläche eines Bedien- oder Funkti- onselementes,
- Fig. 4, 5: Detailansichten zur Erläuterung der Befestigung des Bedien- oder Funkti- onselements am Trägerrahmen,
- Fig. 6: eine Detailansicht zur Erläuterung der Befestigung des Verriegelungsele- ments am Trägerrahmen,
- Fig. 7: eine perspektivische Sicht auf die Rückfläche eines Trägerrahmens,
- Fig. 8: eine perspektivische Sicht auf die Rückfläche eines drei Bedien- oder Funktionselemente aufnehmenden Trägerrahmens.

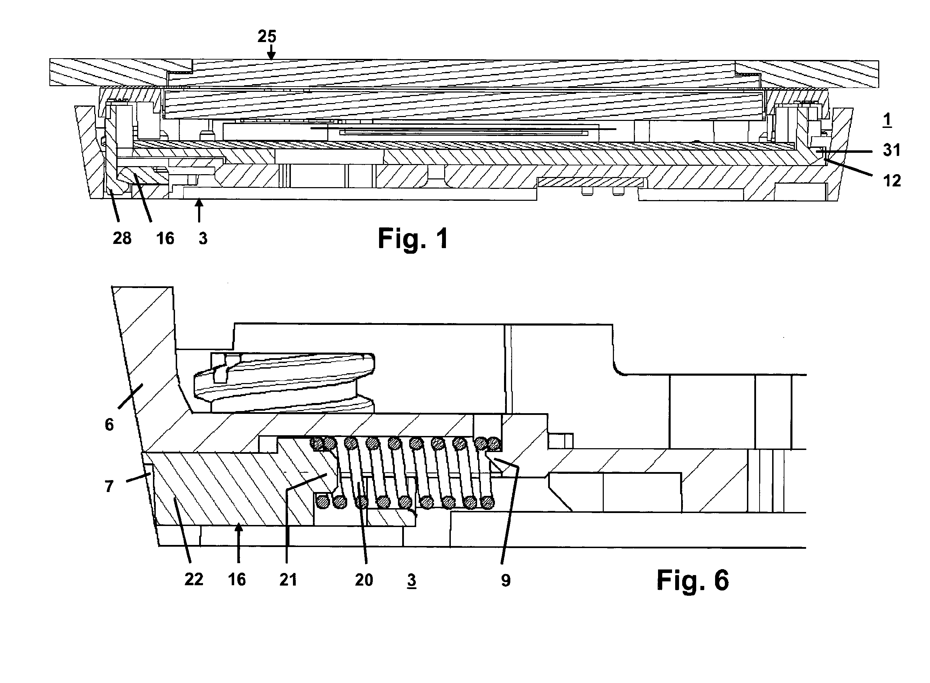

In Fig. 1 ist ein seitlicher Schnitt durch ein aus einem Trägerrahmen und mindestens einem Bedien- oder Funktionselement gebildeten Elektro-Installationsgerät 1 dargestellt. Bei dem an einer Wand montierbaren Elektro-Installationsgerät 1 handelt es sich vorzugsweise um ein elektronisches Installationsgerät, d. h. um eine Sensoreinheit (Bedieneinheit für Stellvorgänge, Eingabegerät, Tastsensoreinheit) eines Installationsbusses der Gebäudesystemtechnik oder um eine Sensoreinheit zum direkten Steuern/Schalten einer Last (Gebiet der konventionellen Installationstechnik). Dabei kann der Trägerrahmen 3 mehrere Bedienelemente oder Funktionselemente 5 - wie z. B. Einfach-Taster, Mehrfach-Taster, Drehelement, Dreh-Drückelement, Joystick, Touchscreen, Lautsprecher, Mikrofon - aufweisen, welche auf mindestens einen (nicht dargestellten) Unterputz(UP)-Einsatz ( = Basiseinheit bzw. Basisgerät) wirken. Mit diesem UP-Einsatz können entweder Lasten direkt (konventionelle Installationstechnik) oder über einen Bus (Gebäudesystemtechnik) gesteuert werden.

Das Trägerrahmenkonzept bietet auch die Möglichkeit, mehrere UP-Einsätze miteinander zu kombinieren. In der konventionellen Installationstechnik ist damit z. B. die Kombination von verschiedenen UP-Geräten - z. B. Dimmer, Schalter oder Jalousieschalter - realisierbar. In der Gebäudesystemtechnik können damit neben einem UP-Busankoppler auch zusätzliche UP-Aktoren über den Trägerrahmen bzw. über im Trägerrahmen integrierte Bauelemente angesteuert werden, welche direkt Lasten schalten oder dimmen können.

Der Trägerrahmen 3 hat quasi die Funktion eines Verbindungselementes zwischen einem in einer handelsüblichen UP-Gerätedose montierten Basisgerät und dem mindestens einen Bedien- oder Funktionselement 25 und wird an einer Wand montiert. Die Befestigung des Bedien- oder Funktionselements 25 am Trägerrahmen 3 erfolgt, indem
- eine Nase 31 des Bedien- oder Funktionselements 25 in einen Hinterschnitt 12 des Trägerrahmens 3 eingreift,
- ein Rasthaken 28 des Bedien- oder Funktionselements 25 und ein federbeaufschlagtes Verriegelungselement 16 des Trägerrahmens 3 arretierend ineinander greifen.

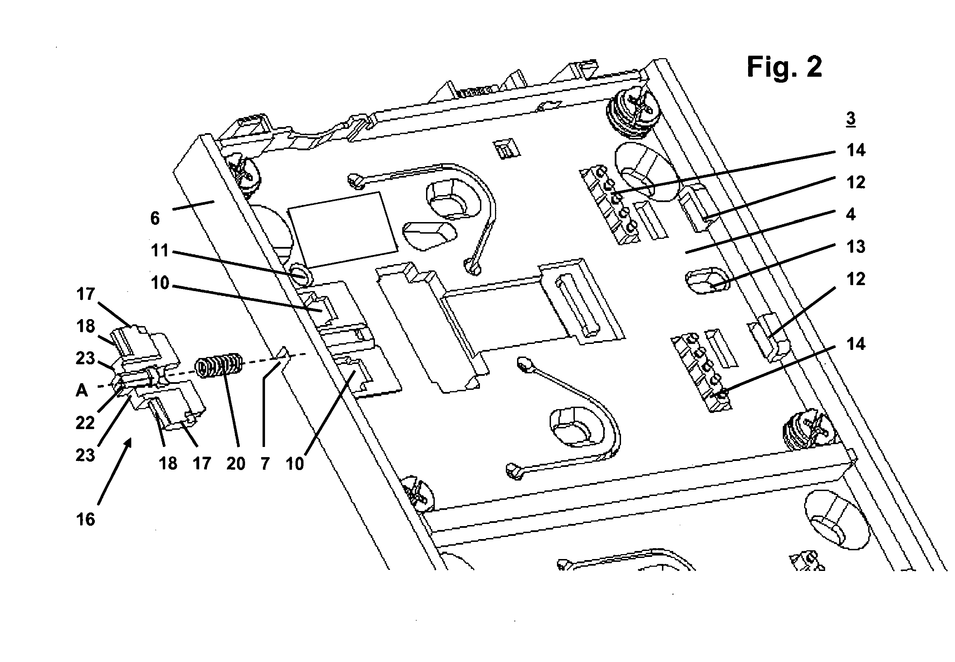

In Fig. 2 ist eine perspektivische Sicht auf die Frontfläche 4 eines Trägerrahmens 3 dargestellt. Dabei sind auf dem einen Abschnitt des gezeigten, zur Aufnahme eines Bedien- oder Funktionselementes dienenden Feldes Kontaktierungsstecker 14 und der Hinterschnitt 12 zu beiden Seiten einer Langloch-Zentrierbohrung 13 sowie auf dem anderen Abschnitt des Feldes eine Zentrierbohrung 11 und zwei Rasthaken-Eingriffe 10 zu erkennen. Der Trägerrahmen 3 ist allseitig von einer Stirnwand 6 umgeben, in welcher zu den beiden Rasthaken-Eingriffen 10 zugeordnet eine Stirnwand-Ausnehmung 7 ausgebildet ist.

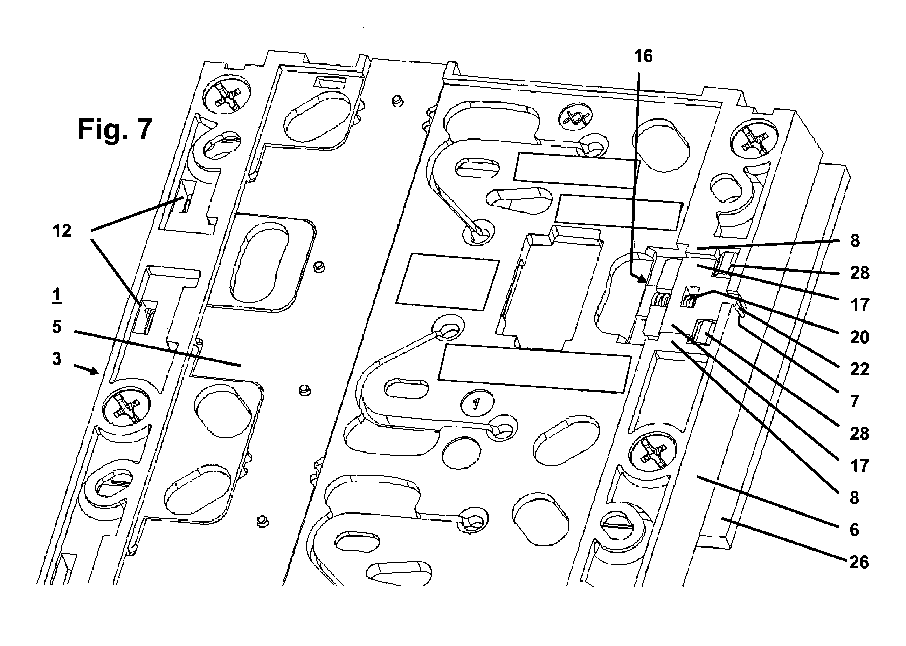

Fig. 2 zeigt des Weiteren das an der Rückfläche (siehe hierzu Ziffer 5 in Fig. 7) des Trägerrahmens 3 in einer Verriegelungselement-Aufnahme (siehe hierzu Ziffer 8 in Fig. 7) montierte Verriegelungselement 16, welches spiegelsymmetrisch zu einer gedachten, zentralen Symmetrieachse A verläuft, welche gleichzeitig die Mittelachse eines Zapfens 22 darstellt, der im Verriegelungszustand in die Stirnwand-Ausnehmung 7 greift. Die Symmetrieachse A verläuft somit im rechten Winkel zur Stirnwand 6 und parallel zur Frontfläche / Rückfläche des Trägerrahmens 3.

Das Verriegelungselement 16 weist beidseitig der Symmetrieachse A
- Führungsflächen 17 zum Eingriff in die Verriegelungselement-Aufnahme 8 auf,
- Einführschrägen 18 für das Zusammenwirken mit den Rasthaken 28 und
- Anschlagflächen 23 für den definierten, federbewirkten Anschlag des Verriegelungselementes gegen die Stirnwand 6
auf. Die Symmetrieachse A bildet gleichzeitig die Mittelachse für eine mit dem Verriegelungselement 16 zusammenarbeitende Feder 20, vorzugsweise eine Spiralfeder aus Federstahl.

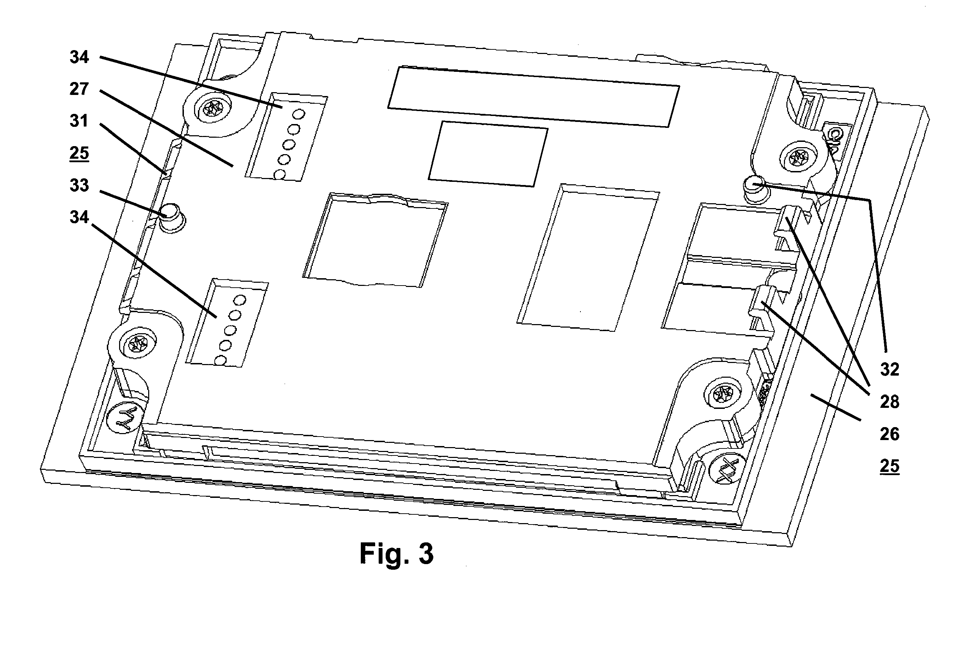

In Fig. 3 ist eine perspektivische Sicht auf die Rückfläche 27 eines Bedien- oder Funktionselementes 25 dargestellt. Dabei sind zu erkennen:
- ein Zentriernocken 33, welcher in die Langloch-Zentrierbohrung 13 des Trägerrahmens 3 eintauchen kann, wodurch die seitliche Lage des ersten Abschnittes des Bedien- oder Funktionselementes 25 gegenüber dem Trägerrahmen 3 präzise festgelegt wird,
- die zum Eingriff in den Hinterschnitt 12 des Trägerrahmens 3 dienende Nase 31,
- ein Zentriernocken 32, welcher in die Zentrierbohrung 11 des Trägerrahmens 3 eintauchen kann, wodurch die seitliche Lage des zweiten Abschnittes des Bedien- oder Funktionselementes 25 gegenüber dem Trägerrahmen 3 präzise festgelegt wird,
- zwei Rasthaken 28, welche in die Rasthaken-Eingriffe 10 des Trägerrahmens 3 eintauchen können, um derart die Verriegelung mit dem Verriegelungselement 16 zu bewirken,
- zwei Kontaktierungsbuchsen 34 für die elektrische Kontaktierung mit den Kontaktierungssteckern 14 des Trägerrahmens 3.

Eine skizzierte Frontfläche 26 des Bedien- oder Funktionselementes 25 ist mit einer Bedieneinheit oder Funktionseinheit versehen.

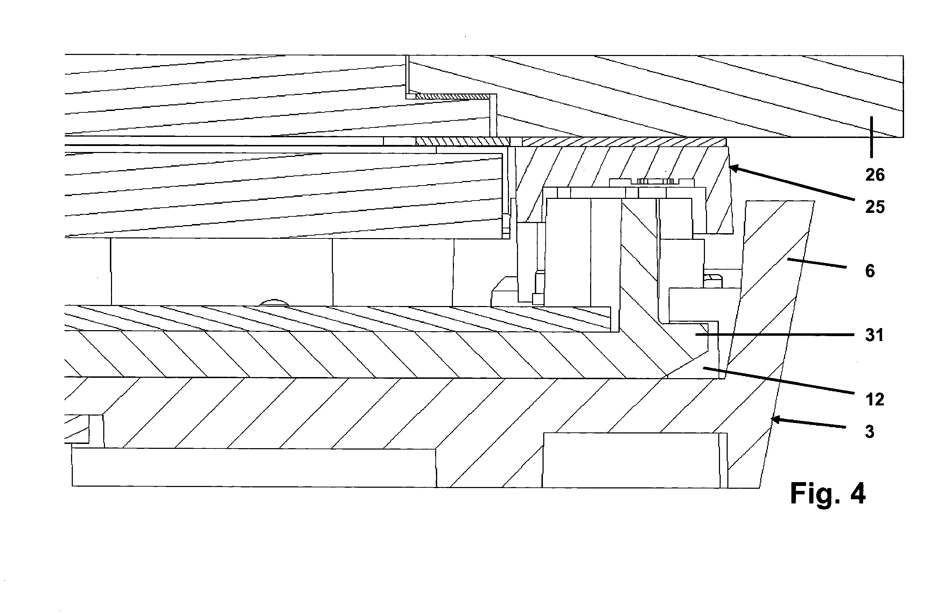

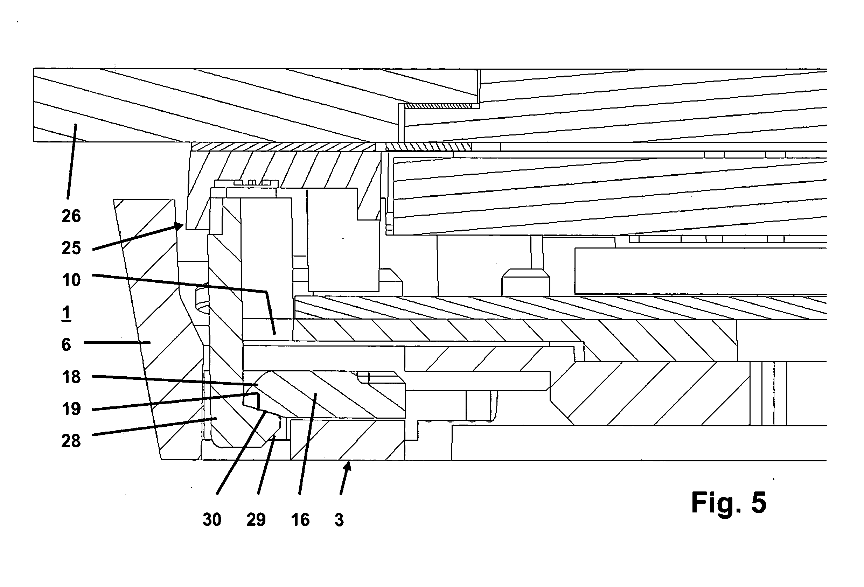

In Fig. 4, 5 sind Detailansichten zur Erläuterung der Befestigung des Bedien- oder Funktionselements am Trägerrahmen dargestellt, und zwar zeigt Fig. 4 die Befestigung des ersten Abschnittes des Bedien- oder Funktionselementes 25 am Trägerrahmen 3 und Fig. 5 die Befestigung des zweiten Abschnittes des Bedien- oder Funktionselementes 25 am Trägerrahmen 3. In Fig. 4 ist zu erkennen, wie die Nase 31 des Bedien- oder Funktionselementes 25 in den nahe der Stirnwand 6 angeordneten Hinterschnitt 12 des Trägerrahmens 3 eingreift. In Fig. 5 ist das Ineinandergreifen von Rasthaken 28 und Verriegelungselement 16 zu erkennen:
- Rastfläche 19 des Verriegelungselements 16 und Rastfläche 30 des Rasthakens 28 greifen ineinander,
- das Verrieglungselement 16 weist eine Einführschräge 18 auf, welche während des Montagevorganges (siehe auch die nachstehende Erläuterung) entlang einer Gleitfläche 29 des Rasthakens 28 gleitet,
- der Rasthaken 28 ist in unmittelbarer Nähe der Stirnwand 6 angeordnet, so dass sich eine starre Ausbildung des Rasthakens 28 ergibt und ein Zurückfedern des Rasthakens 28 in Richtung zur Stirnwand 6 unterbunden ist.

Beide Figuren 4, 5 zeigen eine skizzierte Frontfläche 26 des Bedien- oder Funktionselementes 25 welche mit einer nicht näher dargestellten Bedieneinheit oder Funktionseinheit versehen ist. Fig. 5 zeigt zusätzlich den im Trägerrahmen 3 eingebrachten Rasthaken-Eingriff 10 zur Durchführung des Rasthakens 28.

In Fig. 6 ist eine Detailansicht zur Erläuterung der Befestigung des Verriegelungselements am Trägerrahmen 3 dargestellt. Es ist die Feder 20 zu erkennen, welche zwischen einer Feder-Aufnahme 21 des Verriegelungselementes 16 und einer Feder-Arretierung 9 des Trägerrahmens 3 eingespannt ist, wodurch das Verriegelungselement 16 in Richtung zur Stirnwand 6 und der Zapfen 22 in die Stirnwand-Ausnehmung 7 gedrückt werden.

In Fig. 7 ist eine perspektivische Sicht auf die Rückfläche 5 eines Trägerrahmens 3 dargestellt, wobei insbesondere der Einbau des Verriegelungselements 16 zu erkennen ist. Die vorstehend bereits erwähnten Führungsflächen 17 greifen in nutenförmige Verriegelungselement-Aufnahmen 8 des Trägerrahmens 3 ein, wodurch die transversale Beweglichkeit des Verriegelungselementes 16 parallel zur Frontfläche /Rückfläche des Trägerrahmens 3 ermöglicht wird, wobei diese Beweglichkeit begrenzt wird, indem die Feder 20 den Zapfen 22 in die Stirnwand-Ausnehmung 7 presst (wobei gleichzeitig die Anschlagflächen 23 des Verriegelungselementes 16 gegen die Innenseite der Stirnwand 6 drücken).

Fig. 7 zeigt ferner die über das Verriegelungselement 16 greifenden Rasthaken 28 sowie den Hinterschnitt 12 von der Rückfläche 5 her betrachtet. Ferner ist die Frontfläche 26 des Bedien- oder Funktionselementes 25 skizziert.

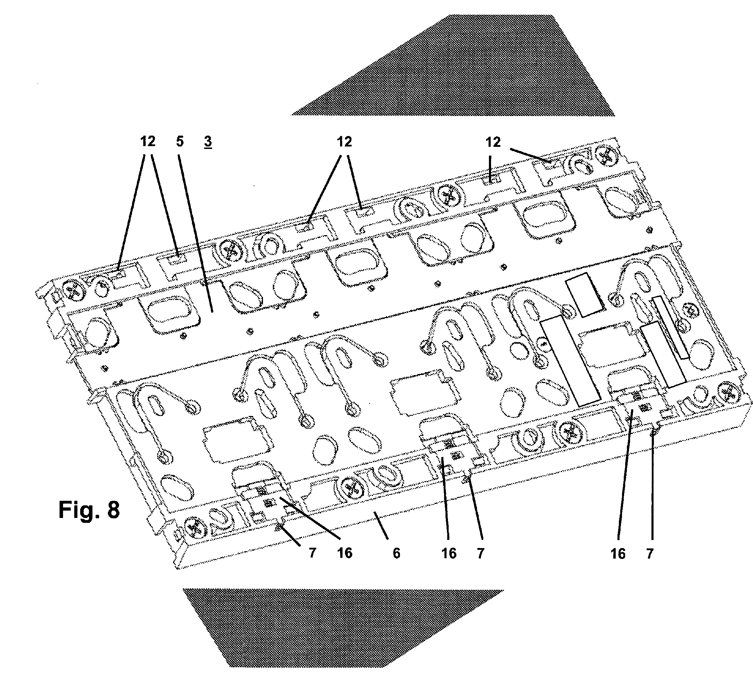

In Fig. 8 ist eine perspektivische Sicht auf die Rückfläche 5 eines drei Bedien- oder Funktionselemente aufnehmenden Trägerrahmens 3 dargestellt. Es sind im Wesentlichen drei gleichartig ausgebildete Felder zu erkennen, wobei jedem Feld jeweils ein Verriegelungselement 16 zugeordnet ist, dementsprechend je Feld ein Hinterschnitt 12 vorgesehen ist und in der allen Feldern gemeinsamen Stirnwand 6 drei Stirnwand-Ausnehmungen 7 eingebracht sind. Selbstverständlich kann der Trägerrahmen 3 auch weniger oder mehr Felder zur Aufnahme von weniger oder mehr Bedienoder Funktionselementen aufweisen.

Für die Montage eines Bedien- oder Funktionselementes 25 am Trägerrahmen 3 wird in einem ersten Schritt der erste Abschnitt des Bedien- oder Funktionselementes 25 in den Trägerrahmen 3 eingeschwenkt, so dass der Zentriernocken 33 in die Langloch-Zentrierbohrung 13 eingreift und die Nase 31 unter den Hinterschnitt 12 greift. In einem zweiten Schritt wird Druck auf den zweiten Abschnitt des Bedienoder Funktionselementes 25 ausgeübt, so dass zunächst der Zentriernocken 32 in die Zentrierbohrung 11 und die Rasthaken 28 in die Rasthaken-Eingriffe 10 eingreifen. Folglich drücken die Gleitflächen 29 der Rasthaken 28 gegen die Einführschrägen 18 der Verriegelungselemente 16 und drängen Letztere gegen die Federkraft der Feder 20 zurück. Nun liegt das Bedien- oder Funktionselement 25 am Trägerrahmen 3 auf und die Feder 20 drückt das Verriegelungselement 16 zurück, bis die Rastflächen 19 und 30 ineinander greifen, wie dies in Fig. 5 gezeigt ist.

Für die Demontage eines Bedien- oder Funktionselementes 25 vom Trägerrahmen 3 drückt ein Hilfswerkzeug gegen den Zapfen 22, wodurch das Verriegelungselement 16 gegen die Federkraft der Feder 20 zurückgedrängt wird. Die Rasthaken 28 liegen nun frei und das Bedien- oder Funktionselementes 25 kann vom Trägerrahmen 3 abgenommen werden.

### Bezugszeichenliste

- 1: Elektro-Installationsgerät
- 2: -
- 3: Trägerrahmen
- 4: Frontfläche
- 5: Rückfläche
- 6: Stirnwand
- 7: Stirnwand-Ausnehmung
- 8: Verriegelungselement-Aufnahme
- 9: Feder-Arretierung
- 10: Rasthaken-Eingriff
- 11: Zentrierbohrung
- 12: Hinterschnitt
- 13: Langloch-Zentrierbohrung
- 14: Kontaktierungsstecker
- 15: -
- 16: Verriegelungselement
- 17: Führungsflächen zum Eingriff in Verriegelungselement-Aufnahme
- 18: Einführschräge
- 19: Rastfläche
- 20: Feder
- 21: Feder-Aufnahme
- 22: Zapfen zum Eingriff in Stirnwand-Ausnehmung
- 23: Anschlagflächen
- 24: -
- 25: Bedien- oder Funktionselement
- 26: Frontfläche mit Bedieneinheit oder Funktionseinheit
- 27: Rückfläche
- 28: Rasthaken (starr) eines Bedien- oder Funktionselements
- 29: Gleitfläche
- 30: Rastfläche
- 31: Nase
- 32: Zentriernocken
- 33: Zentriernocken
- 34: Kontaktierungsbuchsen

## Patentansprüche

1. Elektro-Installationsgerät (1) mit mindestens einem in einer handelsüblichen UP-Gerätedose montierbaren Basisgerät, welches über einen Trägerrahmen (3) mit mindestens einem Bedien- oder Funktionselement (25) verbindbar ist, wozu das mindestens eine Bedien- oder Funktionselement (25) mittels eines Rasthakens (28) in Eingriff mit einem Verriegelungselement (16) des Trägerrahmens (3) steht, der Rasthaken (28) des Bedien- oder Funktionselements (25) starr ausgebildet ist, während das Verrieglungselement (16) federbeaufschlagt und parallel zur Frontfläche / Rückfläche des Trägerrahmens (3) transversal beweglich ist, **dadurch gekennzeichnet, dass** eine Feder (20) zwischen einer Feder-Aufnahme (21) des Verriegelungselementes (16) und einer Feder-Arretierung (9) des Trägerrahmens (3) eingespannt ist, wodurch das Verriegelungselement (96) in Richtung einer den Trägerrahmen (3) umgebenden Stirnwand (6) gedrückt wird.

2. Elektrv-Installafiionsgerät (1) nach Anspruch 1, **dadurch gekennzeichnet, dass** auf dem der Rasthaken (28) - Verriegelungselement (16) - Konfiguration gegenüberliegenden Abschnitt eine Nase (31) des Bedien- oder Funktionselementes (25) in einen Hinterschnitt (12) des Trägerrahmens (3) eingreift.

3. Elektro-Installationsgerät (1) nach einem der vorstehenden Ansprüche,
**dadurch gekennzeichnet, dass** das Verriegelungselement (16) mit Führungsflächen (17) in nutenförmige Verriegelungselement-Aufnahmen (8) des Trägerahmens (3) eingreift.

4. Elektro-Installationsgerät (1) nach einem der vorstehenden Ansprüche,
**dadurch gekennzeichnet, dass** am mit der Nase (31) versehenen Abschnitt des Bedien- oder Funktionselementes (25) ein Zentriernocken (33) an der Rückfläche (27) vorgesehen ist, welcher in eine Langloch-Zentrierbohrung (13) an der Frontfläche (4) des Trägerrahmens (3) eintaucht.

5. Elektro-Installationsgerät (1) nach einem der vorstehenden Ansprüche,
**dadurch gekennzeichnet, dass** am mit dem Rasthaken (28) versehenen Abschnitt des Bedien- oder Funktionselementes (25) ein Zentriemocken (32) an der Rückfläche (27) vorgesehen ist, welcher in eine Zentrierbohrung (11) an der Frontfläche (4) des Trägerrahmens (3) eintaucht.

6. Elektro-Installationsgerät (1) nach einem der vorstehenden Ansprüche,
**dadurch gekennzeichnet, dass** das Verriegelungselement (16) im Verriegelungszustand mit einem von außen zugänglichen und beaufschlagbaren Zapfen (22) in eine in der Stirnwand (6) vorgesehene Stirnwand-Ausnehmung (7) eingreift.

## Claims

1. Electrical installation device (1) having at least one base device which can be installed in a commercially available flush-mounted device box and which can be connected to at least one operator control or functional element (25) by means of a carrier frame (3), for which purpose the at least one operator control or functional element (25) engages with a locking element (16) of the carrier frame (3) by means of a latching hook (28), the latching hook (28) of the operator control or functional element (25) is of rigid design, while the locking element (16) is acted on by a spring and can move in a transversal manner parallel to the front face/rear face of the carrier frame (3), **characterized in that** a spring (20) is tensioned between a spring receptacle (21) of the locking element (16) and a spring arresting means (9) of the carrier frame (3), as a result of which the locking element (16) is pushed in the direction of an end wall (6) which surrounds the carrier frame (3).

2. Electrical installation device (1) according to Claim 1, **characterized in that** a lug (31) of the operator control or functional element (25) engages in an undercut (12) of the carrier frame (3) on that portion which is situated opposite the latching hook (28)/locking element (16) configuration.

3. Electrical installation device (1) according to either of the preceding claims, **characterized in that** the locking element (16) engages into slot-like locking element receptacles (8) of the carrier frame (3) by way of guide faces (17).

4. Electrical installation device (1) according to one of the preceding claims, **characterized in that** a centring cam (33) is provided on the rear face (27) of the portion of the operator control or functional element (25) which is provided with the lug (31), the said centring cam entering an elongate centring hole (13) on the front face (4) of the carrier frame (3).

5. Electrical installation device (1) according to one of the preceding claims, **characterized in that** a centring cam (32) is provided on the rear face (27) of the portion of the operator control or functional element (25) which is provided with the latching hook (28), the said centring cam entering a centring hole (11) on the front face (4) of the carrier frame (3).

6. Electrical installation device (1) according to one of the preceding claims, **characterized in that** the locking element (16) engages into an end wall recess (7), which is provided in the end wall (6), in the state in which the said locking element is locked to a pin (22) which is accessible from and can be acted on from the outside.

## Revendications

1. Appareil d'installation électrique (1) comprenant au moins un appareil de base pouvant être monté dans un connecteur d'appareil encastré disponible dans le commerce, qui peut être connecté par le biais d'un cadre porteur (3) à au moins un élément de commande ou fonctionnel (25), l'au moins un élément de commande ou fonctionnel (25) étant à cet effet en prise au moyen d'un crochet d'encliquetage (28) avec un élément de verrouillage (16) du cadre porteur (3), le crochet d'encliquetage (28) de l'élément de commande ou fonctionnel (25) étant réalisé sous forme rigide, tandis que l'élément de verrouillage (16) est sollicité par ressort et est déplaçable transversalement parallèlement à la face avant/la face arrière du cadre porteur (3), **caractérisé en ce qu'**un ressort (20) est serré entre un logement de ressort (21) de l'élément de verrouillage (16) et un blocage de ressort (9) du cadre porteur (3), de sorte que l'élément de verrouillage (16) soit pressé dans la direction d'une paroi frontale (6) entourant le cadre porteur (3).

2. Appareil d'installation électrique (1) selon la revendication 1, **caractérisé en ce qu'**un ergot (31) de l'élément de commande ou fonctionnel (25) vient en prise dans une contre-dépouille (12) du cadre porteur (3) sur la portion opposée à la configuration de crochet d'encliquetage (28) - élément de verrouillage (16).

3. Appareil d'installation électrique (1) selon l'une quelconque des revendications précédentes, **caractérisé en ce que** l'élément de verrouillage (16) vient en prise avec des faces de guidage (17) dans des logements pour élément de verrouillage (8) en forme de rainure du cadre porteur (3).

4. Appareil d'installation électrique (1) selon l'une quelconque des revendications précédentes, **caractérisé en ce qu'**une came de centrage (33) est prévue au niveau de la face arrière (27) au niveau de la portion de l'élément de commande ou fonctionnel (25) pourvue de l'ergot (31), laquelle came de centrage plonge dans un alésage de centrage à trou oblong (13) au niveau de la face avant (4) du cadre porteur (3).

5. Appareil d'installation électrique (1) selon l'une quelconque des revendications précédentes, **caractérisé en ce qu'**une came de centrage (32) est prévue au niveau de la face arrière (27) au niveau de la portion de l'élément de commande ou fonctionnel (25) pourvue du crochet d'encliquetage (28), laquelle came de centrage plonge dans un alésage de centrage (11) au niveau de la face avant (4) du cadre porteur (3).

6. Appareil d'installation électrique (1) selon l'une quelconque des revendications précédentes, **caractérisé en ce que** l'élément de verrouillage (16), dans l'état de verrouillage, vient en prise avec un tourillon (22) pouvant être sollicité et accessible de l'extérieur dans un évidement de paroi frontale (7) prévu dans la paroi frontale (6).
